# EUROPÄISCHE PATENTSCHRIFT

(11) **EP 1 792 856 B1**
(45) Veröffentlichungstag und Bekanntmachung des Hinweises auf die Patenterteilung: **07.10.2009**
(21) Anmeldenummer: 06023284.0
(22) Anmeldetag: 09.11.2006
(51) Int. Cl.: B65G 17/12, B65G 17/46, B65G 21/20

(54) **Vorrichtung zur Förderung von Werkstücken**
Device for conveying workpieces
Dispositif de transport de pièces

(30) Priorität: 03.12.2005 DE 102005057852
(43) Veröffentlichungstag der Anmeldung: 06.06.2007
(73) Patentinhaber: EISENMANN Anlagenbau GmbH & Co. KG, 71032 Böblingen (DE)
(72) Erfinder: Nothum, Stefan, 71154 Nufringen (DE)
(74) Vertreter: Ostertag, Ulrich

(56) Entgegenhaltungen:
- DE-B3- 10 249 999

## Beschreibung

Die Erfindung betrifft eine Vorrichtung zur Förderung von Werkstücken entlang eines Bewegungsweges mit einem über eine Förderantriebseinheit angetriebenen Förderer, an dem spindelförmige Elemente befestigt sind, auf denen die Werkstücke anordenbar sind, und mit einer Gleichlaufeinrichtung mit wenigstens einem mit einer Gleichlaufantriebseinheit angetriebenen Führungsmittel zur Führung der spindelförmigen Elemente bei der Bewegung des Förderers, wobei die Gleichlaufantriebseinheit mit der Förderantriebseinheit gekoppelt ist.

Vorrichtungen dieser Art werden zum Befördern von Werkstücken, vorzugsweise von Fahrzeugrädern, entlang einer oder einer Vielzahl von Behandlungsstationen beispielsweise in Lackieranlagen eingesetzt. Die Gleichlaufeinrichtung hält die spindelförmigen Elemente bei ihrer Bewegung. Zusätzlich eliminiert sie ein eventuelles Spiel, das die spindelförmigen Elemente auf dem Förderer haben, so dass die Positionen der Werkstücke relativ zum Förderer sich nicht ändern können.

Aus der DE 102 49 999 B3 ist ein Kettenförderer mit Spindeln zum Transport von Fahrzeugrädern entlang einer Bepulverungsstation bekannt. Die dort beschriebene Gleichlaufeinrichtung umfasst zwei Endlosbänder, die jeweils ein geradliniges und parallel zur Bewegungsrichtung verlaufendes inneres Trum und ein äußeres Trum besitzen. Die Endlosbänder sind jeweils über zwei Umlenkrollen geführt, von denen jeweils eine angetrieben ist. Damit die Lage der Spindeln in Förderrichtung stets exakt definiert ist, liegen die beiden inneren Trums der Endlosbänder im oberen Bereich an den Spindeln an und klemmen diese ein. Um einen absoluten Gleichlauf der Endlosbänder zum Kettenförderer erreichen zu können, ist eine elektronische Verschaltung einer Antriebsquelle des Kettenförderers mit einer Antriebsquelle der Endlosbänder nach Art von Master-and-Slave erforderlich.

Aufgabe der vorliegenden Erfindung ist es, eine Vorrichtung der eingangs genannten Art so zu gestalten, dass technisch einfach die Synchronität der Gleichlaufeinrichtung mit dem Förderer erreicht wird, wobei möglichst wenige elektrische und/oder elektronische Bauteile eingesetzt werden sollen.

Diese Aufgabe wird erfindungsgemäß dadurch gelöst, dass
a) die Kopplung der Gleichlaufantriebseinheit mit der Förderantriebseinheit mechanisch ist;
b) das Führungsmittel wenigstens ein Zug- oder Treiborgan aufweist, an dem im Abstand der spindelförmigen Elemente an dem Zug- oder Treiborgan eine Vielzahl von Mitnehmern zur formschlüssigen Mitnahme der spindelförmigen Elemente befestigt ist.

Erfindungsgemäß ist also über die mechanische Kopplung der Antriebseinheiten ein absoluter Gleichlauf des Frührungsmittels mit dem Förderer sichergestellt, da die Synchronität zwangsläufig erfolgt. Mit nur einer Antriebsquelle können so beide Antriebseinheiten synchron angetrieben werden, ohne dass eine elektronische Verschaltung erforderlich ist. Auf diese Weise reduziert sich der elektrische Aufwand. Insbesondere sind zumindest für die Synchronisierung des Führungsmittels mit dem Förderer keine Aktoren, Sensoren, Schaltschrankeinbauten und/oder Verdrahtungen erforderlich. Darüber hinaus werden keine elektronischen Regelkreise benötigt. Dadurch, dass weniger elektronische Bauteile erforderlich sind, wird der Energiebedarf der Vorrichtung reduziert. Im Übrigen ist die Empfindlichkeit der Vorrichtung insbesondere gegenüber elektromechanischen Störeinflüssen gering, so dass die Vorrichtung insgesamt sehr prozesssicher und eine hohe Verfügbarkeit gewährleistet ist. Außerdem ist auf Grund der Zwangskopplung die Synchronität des Führungsmittels mit dem Förderer geschwindigkeitsunabhängig. Im Übrigen reduziert sich der mechanische Aufwand und der Wartungsaufwand, insbesondere dann, wenn nur eine Antriebsquelle verwendet wird. Im Unterschied zu der aus dem Stand der Technik bekannten Klemmung der spindelförmigen Elementen zwischen zwei Bändern ist die Führung mit Mitnehmern gegenüber Reibungsverlusten, verursacht beispielsweise durch Flüssigkeiten, insbesondere durch Reinigungsmittel oder Wasser, unempfindlich, da ein Durchrutschen der spindelförmigen Elemente hier von vornherein durch die Mitnehmer verhindert wird. Jedem spindelförmigen Element ist so ein Mitnehmer exakt zugeordnet, und die spindelförmigen Elemente werden synchron und lagegenau zum Förderer mitgeführt.

Bei einer vorteilhaften Ausführungsform ist die Gleichlaufantriebseinheit einfach über eine Gelenkwelle und/oder ein Zwischengetriebe mit der Förderantriebseinheit verbunden. Über die Gelenkwelle ist eine direkte Kopplung der Gleichlaufantriebseinheit an die Förderantriebseinheit möglich. Ein Zwischengetriebe erlaubt darüber hinaus eine Wandlung der Drehzahl und/oder der Drehmomente.

Um den Verlauf des Führungsmittels einfach an den Bewegungsweg anpassen zu können, kann das Zug- oder Treiborgan ketten- oder gurtartig sein. Der Verlauf solcher Zug- oder Treiborgane ist über entsprechende Umlenkungen flexibel an den Bewegungsweg anpassbar.

Ferner kann das Zug- oder Treiborgan flexibel und geschlossen sein. Dies hat den Vorteil, dass wegen der Flexibilität des Zug- oder Treiborgans das Führungsmittel so angeordnet werden kann, dass es lediglich in Bereichen angreift, wo eine präzise Führung der spindelförmigen Elemente erforderlich ist (Führungsbereiche). Dies ist beispielsweise dort der Fall, wo eine Abnahme oder Übergabe der Werkstücke von beziehungsweise an einen Roboter stattfindet.

Die Mitnehmer können jeweils wenigstens einen insbesondere mit Rollen ausgestatteten Führungsbolzen aufweisen, mit dem sie in einer Kulissenführung lagenkontrolliert führbar sind. Auf diese Weise wirken keine Rückstellkräfte insbesondere von den Mitnehmern auf die spindelförmigen Elemente, da diese Kräfte von den Führungsbolzen in der Kulissenführung aufgenommen werden. Die spindelförmigen Elemente werden quasi frei von den Mitnehmern gehalten.

Damit die Lage beziehungsweise die Orientierung der Mitnehmer relativ zum Zug- oder Treiborgan geändert werden kann, können die Mitnehmer jeweils über ein Anlenkelement schwenkbar an dem Zug- oder Treiborgan befestigt sein. Dies ist insbesondere dort von großem Vorteil, wo das Zug- oder Treiborgan mit dem Mitnehmern beispielsweise entlang einer Biegung von dem Förderer weg läuft, aber die Winkelorientierung der Mitnehmer relativ zum Förderer beibehalten werden soll.

Außerdem können die Mitnehmer jeweils eine Greif- und Führungsaufnahme für die spindelförmigen Elemente aufweisen, mit der die spindelförmigen Elemente insbesondere zwangskraftfrei gegriffen werden können.

Um das geschlossene Zug- oder Treiborgan exakt antreiben und führen zu können, kann die Gleichlaufeinrichtung wenigstens zwei Umlenkeinrichtungen für das Zug- oder Treiborgan aufweisen, zwischen denen insbesondere gerade Führungsprofile für das Zug- oder Treiborgan angeordnet sind. Die Führungsprofile stellen sicher, dass das Zug- oder Treiborgan insbesondere dort, wo die Mitnehmer die spindelförmigen Elemente führen, also im Führungsbereich, kein Spiel hat. Wenigstens eine der Umlenkeinrichtungen kann antreibbar sein, so dass kein separates Antriebsmittel für das Zug- oder Treiborgan erforderlich ist.

Um ein Ausweichen der spindelförmigen Elemente von dem Führungsmittel weg zu verhindern, kann dem Führungsmittel auf der ihm abgewandten Gegenseite des Förderers ein insbesondere gerades Gegenführungsmittel für die spindelförmigen Elemente zugeordnet sein.

Ein Ausführungsbeispiel der Erfindung wird nachfolgend anhand der Zeichnung näher erläutert; es zeigen
- Figur 1: schematisch einen vertikalen Schnitt einer Fördervorrichtung für Werkstücke mit einem Kettenförderer und einer Gleichlaufeinrichtung für an dem Kettenförderer befestigte spindelförmigen Elementen, gesehen senkrecht zur Bewegungsrichtung der spindelförmigen Elemente;
- Figur 2: schematisch eine Detailansicht der Fördervorrichtung aus Figur 1 im Bereich der Gleichlaufeinrichtung;
- Figur 3: schematisch eine Draufsicht der Fördervorrichtung aus Figur 1;
- Figur 4: schematisch eine Detailansicht der Fördervorrichtung aus Figur 3 im Bereich eines Mitnehmers der Gleichlaufeinrichtung .

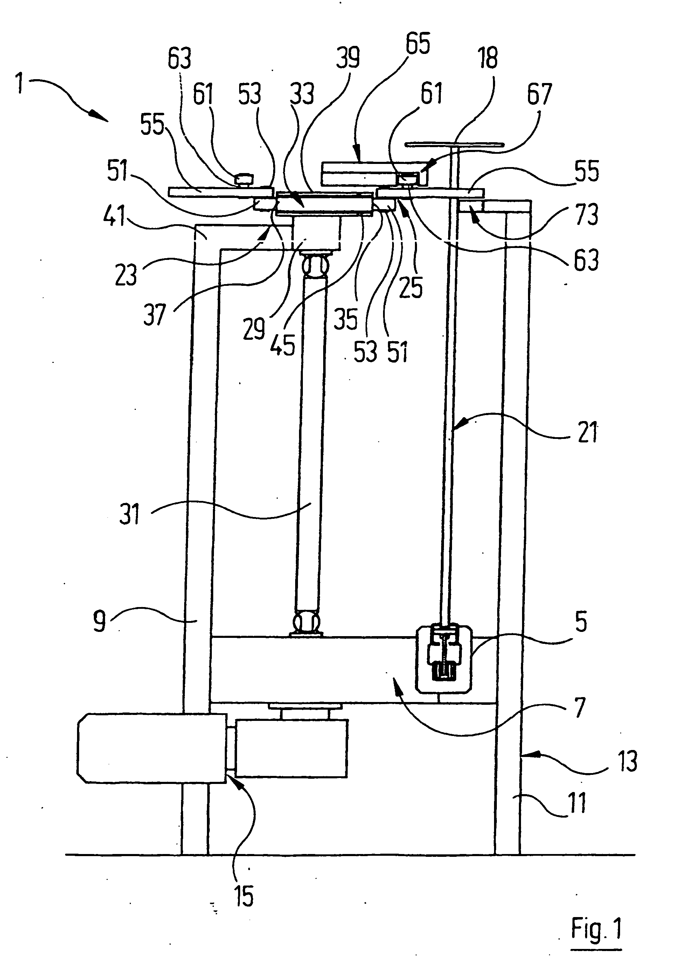

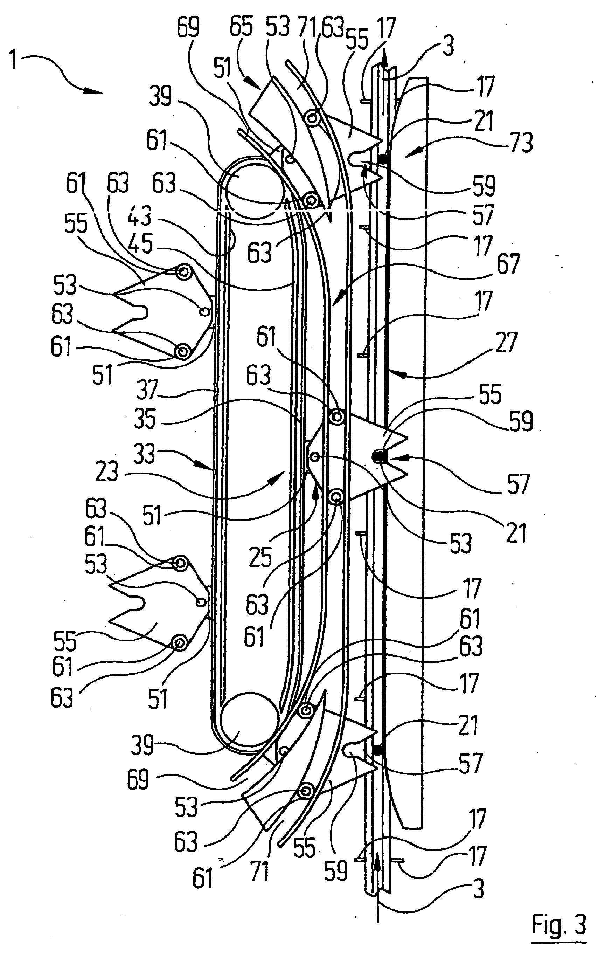

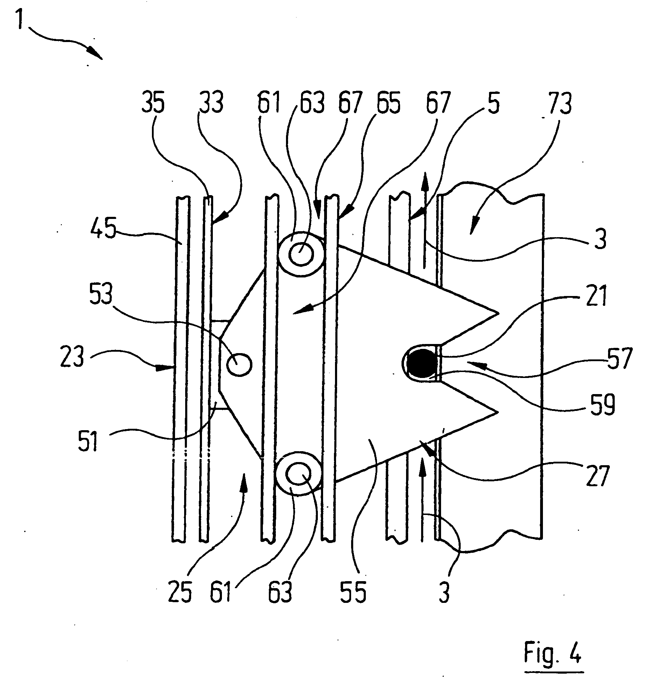

In Figur 1 ist schematisch ein vertikaler Schnitt einer insgesamt mit dem Bezugszeichen 1 versehenen Fördervorrichtung für nicht gezeigte Werkstücke, beispielsweise Fahrzeugräder, entlang eines in Figuren 3 und 4 in der Draufsicht sichtbaren Bewegungsweges, angedeutet durch die Pfeile 3, dargestellt.

Die Fördervorrichtung 1 umfasst einen langgestreckten in Figur 1 unten im Wesentlichen horizontal senkrecht zur Zeichenebene verlaufenden Kettenförderer 5. Der Kettenförderer 5 ist mit einer Förderantriebseinheit 7 verbunden, über die er antreibbar ist. Die Förderantriebseinheit 7 weist ein etwa quaderförmiges horizontal angeordnetes Gehäuse auf und ist zwischen einer vertikalen Gleichlaufeinrichtungsstütze 9, in Figur 1 links, und einer vertikalen Fördererstütze 11, in Figur 1 rechts, eines Gestells 13 der Fördervorrichtung 1 befestigt. Die Förderantriebseinheit 7 ist mit einem Getriebemotor 15 verbunden, welcher in Figur 1 unten an dieser angeordnet und ebenfalls an der Gleichlaufeinrichtungsstütze 9 befestigt ist.

Der Kettenförderer 5 ist in einem in Figur 1 sichtbaren Teilbereich an der Förderantriebseinheit 7 angeordnet. Er ist in weiteren Teilbereichen auf in Figuren 3 sichtbaren Kettenfördererführungselementen 17 angebracht, welche an nicht gezeigten weiteren Fördererstützen befestigt sind. Die weiteren nicht dargestellten Fördererstützen mit den Kettenfördererführungselementen 17 sind entlang des Bewegungsweges 3 so angeordnet, dass der Kettenförderer 5 stabil gelagert und geführt ist.

An dem Kettenförderer 5 sind in Figur 1 jeweils mit ihrem unteren Ende vertikale, spindelförmige Elemente 21 drehbar befestigt, auf deren oberen plattenförmigen Werkstückträgern 18 die Werkstücke anordenbar sind.

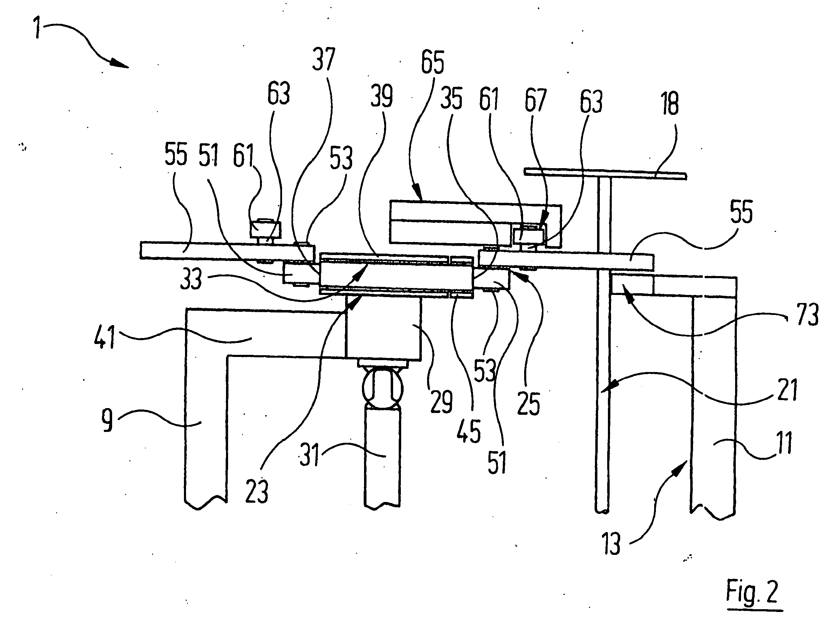

Darüber hinaus weist die Fördervorrichtung 1 in Figuren 1 und 2 etwas unterhalb der Werkstückträger 18 der spindelförmigen Elemente 21 eine Gleichlaufeinrichtung 23 mit einer Führungseinrichtung 25 zur Führung der spindelförmigen Elemente 21 bei deren Bewegung auf. Die Gleichlaufeinrichtung 23 ist in einem in Figuren 3 und 4 sichtbaren geraden Führungsbereich 27 parallel zur Förderrichtung des Kettenförderers 5 entlang des Bewegungsweges 3 ausgerichtet. Sie ergreift im Führungsbereich 27 die spindelförmigen Elemente 21 in weiter unten beschriebener Weise jeweils nahe ihrem dem Kettenförderer 5 abgewandten Ende, bringt sie in eine definierte, präzise Relativlage zum Kettenförderer 5, hält sie in dieser und führt sie synchron zum Kettenförderer 5 mit.

Die Führungseinrichtung 25 ist mit einer in Figuren 1 und 2 sichtbaren Gleichlaufantriebseinheit 29 verbunden. Die Gleichlaufantriebseinheit 29 ist über eine vertikal verlaufende Gelenkwelle 31 mit der Förderantriebseinheit 7 gekoppelt. Beim Betrieb der Förderantriebseinheit 7 und damit des Kettenförderers 5 wird die Gleichlaufantriebseinheit 29 und so die Führungseinrichtung 25 über die Gelenkwelle 31 synchron mit angetrieben.

Die Führungseinrichtung 25 umfasst einen kurzen, geschlossenen Führungsgurt 33 in Form eines Endlosbandes. Der Führungsgurt 33 weist ein geradliniges und parallel zum Bewegungsweg 3 entlang des Führungsbereichs 27 verlaufendes, dem Kettenförderer 5 zugewandtes Trum 35 und ein dem Kettenförderer 5 abgewandtes Trum 37 auf. Der Führungsgurt 33 ist über zwei Umlenkrollen 39 geführt, von denen die in Figur 1 sichtbare beziehungsweise in Figur 3 obere mit der Gleichlaufantriebseinheit 29 antreibbar verbunden ist. Die Umlenkrollen 39 beziehungsweise die Gleichlaufantriebseinheit 29 sind über Querstreben 41, von denen in Figuren 1 und 2 lediglich die der in Figur 3 oberen Umlenkrolle 39 zugehörige sichtbar ist, an den oberen Enden der jeweiligen Gleichlaufeinrichtungsstütze 9 befestigt.

Die Trums 35 und 37 werden jeweils entlang eines im Wesentlichen geraden, parallel zum Bewegungsweg 3 verlaufenden starren Führungsprofil 43 beziehungsweise 45 geführt und von diesen getragen. Das Führungsprofil 43 ist lediglich in Figur 3 sichtbar. Die Führungsprofile 43 und 45 befinden sich in dem durch den Führungsgurt 33 umgebenden Raum jeweils auf der dem anderen Trum 37 beziehungsweise 35 zugewandten Innenseite der Trums 35 und 37. Sie sind mit nicht dargestellten Befestigungsmitteln an dem Gestell 13 befestigt.

Das dem Kettenförderer 5 abgewandte Führungsprofil 43 verläuft, wie in Figur 3 sichtbar, in seiner Verlängerung tangential zu beiden Umlenkrollen 39, so dass es für das abgewandte Trum 37 stabilisierend wirkt.

Das dem Kettenförderer 5 zugewandte Führungsprofil 45 ist aus dem durch die dortige gemeinsame Tangente an die beiden Umlenkrollen 39 begrenzten Innenbereich in Richtung des Kettenförderers 5 parallelversetzt. Die beiden Enden des Führungsprofils 45 sind zu der jeweiligen Umlenkrollen 39 hin gebogen, so dass das Führungsprofil 45 dort jeweils tangential zur Umlenkrolle 39 ausläuft. Auf diese Weise wird der Verlauf des dem Kettenförderer 5 zugewandten Trums 35 sanft an die Krümmung der Umlenkrollen 39 angepasst.

An der Außenseite des Führungsgurtes 33 ist im Abstand der spindelförmigen Elemente 21 eine Vielzahl von quaderförmigen Anlenkelementen 51 angeordnet. An jedem Anlenkelement 51 ist über ein Mitnehmergelenk 53 ein Mitnehmer 55 für eines der spindelförmigen Elemente 21 schwenkbar befestigt.

Die Mitnehmer 55 sind ebene Platten, die im Wesentlichen die Form eines gleichschenkligen Drachenvierecks haben, was in Figuren 3 und 4 sichtbar ist. Dessen eine, dem Mitnehmergelenk 53 benachbarte Spitze ist allerdings gekappt. Die gegenüberliegende, nach außen weisende Spitze ist V-förmig eingeschnitten. Die Symmetrieachsen der Drachenvierecke stehen, solange sich der Mitnehmer 55 innerhalb des Führungsbereichs 27 befindet, jeweils senkrecht auf der Außenfläche des Führungsgurtes 33. Ihre Ebenen verlaufen parallel zur der durch den endlosen Führungsgurt 33 aufgespannten Ebene.

Die V-förmigen Einschnitte der Mitnehmer 55 dienen als Greif- und Führungsaufnahme 57 für die spindelförmigen Elemente 21. Die Spitzen der V's zeigen zum Führungsgurt 33. Sie gehen jeweils in eine etwa halbkreisförmige Senke 59 über. Der Durchmesser der halbkreisförmigen Senken 59 ist etwas größer als der Außendurchmesser der spindelförmigen Elemente 21, so dass die spindelförmigen Elemente 21 dort eingeführt und gehalten werden können.

Jeder Mitnehmer 55 weist zwei jeweils mit einer Rolle 61 ausgestattete Führungsbolzen 63 auf. Die Führungsbolzen 63 ragen auf der dem Anlenkelement 51 abgewandten Seite des Mitnehmers 55 symmetrisch dessen Symmetrieachse des Mitnehmers 55 senkrecht, in Figur 1 nach oben, heraus. Mit den Führungsbolzen 63 sind die Mitnehmer 55 in einer Kulissenführung 65 lagenkontrolliert führbar.

Die Kulissenführung 65 befindet sich, von der Seite, wie in Figur 1 betrachtet, über den Mitnehmern 55, von oben, wie in Figur 3 betrachtet, zwischen dem Führungsgurt 33 und dem Kettenförderer 5. Sie ist mit nicht dargestellten Befestigungsmitteln am Gestell 13 befestigt. Die Kulissenführung 65 ist im Wesentlichen eine Schiene mit einer zu den Mitnehmern 55 hin offenen, im Wesentlichen parallel zum Bewegungsweg 3 verlaufenden Führungsnut 67. In den Bereichen der Umlenkrollen 39 teilt sich die Führungsnut 67 jeweils spitzwinklig in einen dem Kettenförderer 5 zugewandten Führungsnutbereich 71 und einen dem Kettenförderer 5 abgewandten Führungsnutbereich 69, wie dies in Figur 3 sichtbar ist. Beide Führungsnutbereiche 69 und 71 weisen vor beziehungsweise hinter dem Führungsbereich 27 je eine Biegung zu der jeweiligen Umlenkrolle 39 hin auf, wobei der dem Kettenförderer 5 abgewandte Führungsnutbereich 69 nahezu tangential zur jeweiligen Umlenkrolle 39 und der dem Kettenförderer 5 zugewandte Führungsnutbereich 71 in einem größeren Abstand mit einem größeren Krümmungsradius als der dem Kettenförderer 5 abgewandte Führungsnutbereich 69 verläuft.

Mit Hilfe der Führungsbolzen 63 und den auf ihnen gelagerten Rollen 61 der Kulissenführung 65 können die Mitnehmer 55 in Eingriff mit den spindelförmigen Elementen 21 gebracht werden. Hierzu sind die Form und die Lage der Biegungen und die Abstände der Führungsnutbereiche 69 und 71 untereinander und zum Führungsgurt 33, die Abmessungen und Drehpunkte der Mitnehmergelenke 53 sowie die Positionen der Führungsbolzen 63 und Rollen 61 so aneinander angepasst, dass beim Vorschub des Führungsgurtes 33 der in Richtung des Bewegungsweges 3 vordere Führungsbolzen 63 des Mitnehmers 55 in den dem Kettenförderer 5 zugewandten Führungsnutbereich 71 und der hintere Führungsbolzen 63 in den dem Kettenförderer 5 abgewandten Führungsnutbereich 69 geführt wird, derart, dass der Mitnehmer 55 seine Winkelorientierung relativ zum Kettenförderer 5 zumindest solange nicht ändert, bis sich das jeweilige spindelförmige Element 21 außerhalb des Führungsbereiches 27 nicht mehr im Bereich der Greif- und Führungsaufnahme 57 befindet. Der Mitnehmer 55 führt also eine Translationsbewegung parallel zum Bewegungsweg 3 synchron zu dem spindelförmigen Element 21 und gleichzeitig eine überlagerte Translationsbewegung senkrecht zum Bewegungsweg 3 von diesem weg aus. Auf diese Weise kann nahezu kraft- und reibungsfrei die Greif- und Führungsaufnahme 57 von dem spindelförmigen Element 21 gezogen werden. Die Drachenform der Mitnehmer 55 ermöglicht hierbei, dass diese im Bereich der Umlenkrollen 39 sehr nah zum Führungsgurt 33 hin geschwenkt werden können. Auf diese Weise ist es möglich, die Mitnehmer 55 im Umkehrpunkt des Führungsgurtes 33 soweit zu schwenken, dass ihre Symmetrieachsen nahezu tangential zur jeweiligen Umlenkrolle 39, senkrecht zum Bewegungsweg 3 verlaufen.

Das Aufschieben der Greif- und Führungsaufnahme 57 auf die entsprechenden spindelförmigen Elemente 21 beim Eintritt des Mitnehmers 55 in den Führungsbereich 27, in Figur 3 unten, erfolgt analog in umgekehrter Weise. Hierbei befindet sich der in Richtung des Bewegungsweges 3 vordere Führungsbolzen 63 mit der Rolle 61 in dem dem Kettenförderer 5 abgewandten Führungsnutbereich 69 und der hintere Führungsbolzen 63 mit zugehöriger Rolle 61 in dem dem Kettenförderer 5 zugewandten Führungsnutbereich 71. Die spindelförmigen Elemente 21 werden zwangskraftfrei von den entsprechenden Mitnehmern 55 gegriffen und synchron sowie lagegenau zum Kettenförderer 5 mitgeführt bis zur oben beschrieben Trennung im Anschluss an den Führungsbereich 27 auf Höhe der in Figur 3 oberen Umlenkrolle 39.

Die V-Form der Greif- und Führungsaufnahme 57 unterstützt das kraftfreie, nahezu berührungslose Aufnehmen und Abgeben des entsprechenden spindelförmigen Elementes 21.

Der Führungseinrichtung 25 ist auf der ihr abgewandten Gegenseite des Kettenförderers 5, wie in Figur 1 von der Seite betrachtet, unterhalb der Mitnehmer 55 etwa auf gleicher Höhe des Führungsgurtes 33 eine in Richtung des Führungsbereiches 27 langgestreckte quaderförmige Gegenführungseinrichtung 73 für die spindelförmigen Elemente 21 zugeordnet. Deren dem Kettenförderer 5 zugewandte Seite verläuft parallel zum Bewegungsweg 3, so dass die spindelförmigen Elemente 21 beim Durchlaufen des Führungsbereichs 27 nahezu kraft- und reibungsfrei an der Gegenführungseinrichtung 73 entlanggleiten. Die Gegenführungseinrichtung 73 ragt beidseitig etwas über den etwa durch die Umlenkrollen 39 begrenzten Führungsbereich 27 hinaus; dies ist in Figur 3 sichtbar. Ihre dem Führungsgurt 33 zugewandte Oberfläche ist an beiden Enden vom Führungsgurt 33 weg gebogen, wodurch der Ein- beziehungsweise Austritt der spindelförmigen Elemente 21 in den Führungsbereich 27 erleichtert wird.

Die Gegenführungseinrichtung 73 ist an den oberen Enden der Förderstützen 11 befestigt.

Anstelle des Kettenförderers 5 kann auch ein andersartiger Förderer verwendet werden.

Statt oder zusätzlich zur Gelenkwelle 31 kann die Gleichlaufantriebseinheit 29 auch in anderer Weise, beispielsweise über ein Zwischengetriebe, mechanisch mit der Förderantriebseinheit 7 gekoppelt sein. Die Gleichlaufantriebseinheit 29 und die Förderantriebseinheit 7 können auch nebeneinander, insbesondere auf gleicher Höhe, angeordnet sein. Sie können auch in ein gemeinsames Gehäuse integriert und/oder als eine einzige kombinierte Antriebseinheit realisiert sein.

Statt des Führungsgurtes 33 kann auch ein andersartiges flexibles Zug- oder Treiborgan, insbesondere eine Kette, ein Band oder ein Riemen, vorgesehen sein. Es können auch mehrere Zug- oder Treiborgane verwendet werden. Das Zug- oder Treiborgan kann statt geschlossen auch offen sein.

Jeder Mitnehmer 55 kann statt zwei Führungsbolzen 63 auch nur einen oder mehr als zwei Führungsbolzen 63 aufweisen. Die Führungsbolzen 63 können auch ohne Rollen 61 ausgebildet sein.

Die Gleichlaufeinrichtung 23 kann auch mehr als zwei Umlenkeinrichtungen aufweisen, mit denen die Führungseinrichtung 25 in unterschiedlich orientierte, an den Verlauf des Bewegungsweges 3 angepasste Führungsbereiche unterteilbar ist.

## Patentansprüche

1. Vorrichtung zur Förderung von Werkstücken entlang
eines Bewegungsweges (3) mit einem über eine Förderantriebseinheit (7) angetriebenen Förderer (5), an dem spindelförmige Elemente (21) befestigt sind, auf denen die Werkstücke anordenbar sind, und mit einer Gleichlaufeinrichtung (23) mit wenigstens einem mit einer Gleichlaufantriebseinheit (29) angetriebenen Führungsmittel (25) zur Führung der spindelförmigen Elemente (21) bei der Bewegung des Förderers (5), wobei die Gleichlaufantriebseinheit (29) mit der Förderantriebseinheit (7) gekoppelt ist,
**dadurch gekennzeichnet, dass**
a) die Kopplung der Gleichlaufantriebseinheit (29) mit der Förderantriebseinheit (7) mechanisch ist;
b) das Führungsmittel (25) wenigstens ein Zug- oder Treiborgan (33) aufweist, an dem im Abstand der spindelförmigen Elemente (21) an dem Zug- oder Treiborgan (33) eine Vielzahl von Mitnehmern (55) zur formschlüssigen Mitnahme der spindelförmigen Elemente (21) befestigt ist.

2. Vorrichtung nach Anspruch 1, **dadurch gekennzeichnet, dass** die Gleichlaufantriebseinheit (29) über eine Gelenkwelle (31) und/oder ein Zwischengetriebe mit der Förderantriebseinheit (7) verbunden ist.

3. Vorrichtung nach Anspruch 1 oder 2, **dadurch gekennzeichnet, dass** das Zug- oder Treiborgan (33) ketten- oder gurtartig ist.

4. Vorrichtung nach Anspruch 3, **dadurch gekennzeichnet, dass** das Zug- oder Treiborgan (33) flexibel und geschlossen ist.

5. Vorrichtung nach einem der Ansprüche 1 bis 4, **dadurch gekennzeichnet, dass** die Mitnehmer (55) jeweils wenigstens einen insbesondere mit Rollen (61) ausgestatteten Führungsbolzen (63) aufweisen, mit dem sie in einer Kulissenführung (65) lagenkontrolliert führbar sind.

6. Vorrichtung nach einem der Ansprüche 1 bis 5, **dadurch gekennzeichnet, dass** die Mitnehmer (55) jeweils über ein Anlenkelement (51) schwenkbar an dem Zug- oder Treiborgan (33) befestigt sind.

7. Vorrichtung nach einem der Ansprüche 1 bis 6, **dadurch gekennzeichnet, dass** die Mitnehmer (55) jeweils eine Greif- und Führungsaufnahme (57) für die spindelförmigen Elemente (21) aufweisen.

8. Vorrichtung nach einem der vorhergehenden Ansprüche, **dadurch gekennzeichnet, dass** die Gleichlaufeinrichtung (23) wenigstens zwei Umlenkeinrichtungen (39) für das Zug- oder Treiborgan (33) aufweist, zwischen denen insbesondere gerade Führungsprofile (43, 45) für das Zug- oder Treiborgan (33) angeordnet sind, wobei wenigstens eine der Umlenkeinrichtungen (39) antreibbar ist.

9. Vorrichtung nach einem der vorhergehenden Ansprüche, **dadurch gekennzeichnet, dass** dem Führungsmittel (25) auf der ihm abgewandten Gegenseite des Förderers (5) ein insbesondere gerades Gegenführungsmittel (73) für die spindelförmigen Elemente (21) zugeordnet ist.

## Claims

1. Device for conveying workpieces along a path of movement (3), comprising a conveyor (5), driven by a conveying drive unit (7), to which spindle-like elements (21) are fastened on which the workpieces may be arranged, and comprising a synchronising mechanism (23) with at least one guide means (25), driven by a synchronising drive unit (29), for guiding the spindle-like elements (21) during movement of the conveyor (5), the synchronising drive unit (29) being coupled to the conveying drive unit (7),
**characterised in that**
a) the coupling of the synchronising drive unit (29) to the conveying drive unit (7) is mechanically,
b) the guide means (25) comprises at least one pulling or driving member (33) to which, at a spacing from the spindle-like elements (21) at the pulling or driving member (33), a plurality of catches (55) is fastened for the form-fitting catching of the spindle-like elements (21).

2. Device according to claim 1, **characterised in that** the synchronising drive unit (29) is connected by a cardan shaft (31) and/or an intermediate gear to the conveying drive unit (7).

3. Device according to claim 2 or 3, **characterised in that** the pulling or driving member (33) is chain- or belt-like.

4. Device according to claim 3, **characterised in that** the pulling or driving member (33) is flexible and closed.

5. Device according to any one of claims 1 to 4, **characterised in that** the catches (55) each comprise at least one guide pin (63), equipped in particular with rollers (61), with which pins they may be guided in a sliding block linkage (65) in a position-controlled manner.

6. Device according to any one of claims 1 to 5, **characterised in that** the catches (55) are each pivotally fastened by a linking element (51) to the pulling or driving element (33).

7. Device according to any one of claims 1 to 6, **characterised in that** the catches (55) each comprise a gripping and guiding receiver (57) for the spindle-like elements (21).

8. Device according to any one of the preceding claims, **characterised in that** the synchronising mechanism (23) comprises at least two deflecting devices (39) for the pulling or driving member (33), between which, in particular straight, guide profiles (43, 45) are arranged for the pulling or driving member (33), wherein at least one of the deflecting devices (39) may be driven.

9. Device according to any one of the preceding claims, **characterised in that** a, in particular straight, counter guide means (73) for the spindle-like elements (21) is associated with the guide means (25) at the opposite side of the conveyor (5) that faces away from the guide means.

## Revendications

1. Dispositif de transport de pièces le long d'un parcours de déplacement (3), avec un transporteur (5) qui est entraîné au moyen d'une unité d'entraînement de transport (7) et sur lequel sont fixés des éléments en forme de broches (21) sur lesquels les pièces peuvent être disposées, et avec un mécanisme de synchronisation (23) doté d'au moins un moyen de guidage (25), entraîné par une unité d'entraînement de synchronisation (29), pour guider les éléments en forme de broches (21) lors du déplacement du transporteur (5), sachant que l'unité d'entraînement de synchronisation (29) est couplée à l'unité d'entraînement de transport (7),
**caractérisé en ce que**
a) le couplage de l'unité d'entraînement de synchronisation (29) avec l'unité d'entraînement de transport (7) est mécanique ;
b) le moyen de guidage (25) présente au moins un organe de traction ou organe entraîneur (33) sur lequel sont fixés, à distance des éléments en forme de broches (21), une pluralité d'entraîneurs (55) destinés à entraîner par engagement positif les éléments en forme de broches (21).

2. Dispositif selon la revendication 1, **caractérisé en ce que** l'unité d'entraînement de synchronisation (29) est reliée à l'unité d'entraînement de transport (7) par l'intermédiaire d'un arbre articulé (31) et/ou d'une transmission intermédiaire.

3. Dispositif selon la revendication 1 ou 2, **caractérisé en ce que** l'organe de traction ou organe entraîneur (33) est du genre chaîne ou du genre courroie.

4. Dispositif selon la revendication 3, **caractérisé en ce que** l'organe de traction ou organe entraîneur (33) est souple et fermé.

5. Dispositif selon l'une des revendications 1 à 4, **caractérisé en ce que** les entraîneurs (55) présentent respectivement au moins un boulon de guidage (63) équipé de galets (61), par lequel ils peuvent être guidés en position contrôlée dans un guide à coulisse (65).

6. Dispositif selon l'une des revendications 1 à 5, **caractérisé en ce que** les entraîneurs (55) sont respectivement fixés à pivotement sur l'organe de traction ou organe entraîneur (33) par l'intermédiaire d'un élément d'articulation (51).

7. Dispositif selon l'une des revendications 1 à 6, **caractérisé en ce que** les entraîneurs (55) présentent respectivement une partie réceptrice (57) de préhension et de guidage pour les éléments en forme de broches (21).

8. Dispositif selon l'une des revendications précédentes, **caractérisé en ce que** le mécanisme de synchronisation (23) présente au moins deux organes de renvoi (39) pour l'organe de traction ou organe entraîneur (33), entre lesquels sont disposés des profilés de guidage notamment rectilignes (43, 45) pour l'organe de traction ou organe entraîneur (33), sachant qu'au moins un des organes de renvoi (39) peut être entraîné.

9. Dispositif selon l'une des revendications précédentes, **caractérisé en ce qu'**un moyen de contre-guidage notamment rectiligne (73) pour les éléments en forme de broches (21) est associé au moyen de guidage (25) sur le côté antagoniste, opposé à ce dernier, du transporteur (5).
